# FASCICULE DE BREVET EUROPEEN

(11) **EP 2 815 267 B1**
(45) Date de publication et mention de la délivrance du brevet: **11.09.2019**
(21) Numéro de dépôt: 13706624.7
(22) Date de dépôt: 04.02.2013
(51) Int. Cl.: G02C 13/00

(54) **DISPOSITIF DE REPÉRAGE DÉSTINÉ À ÊTRE FIXÉ SUR UNE MONTURE DE LUNETTE**
BESTIMMUNGSEINRICHTUNG ZUM FIXIEREN AUF EINE BRILLENFASSUNG
MEASURING DEVICE FOR FIXING ONTO AN EYEGLASS FRAME

(30) Priorité: 16.02.2012 FR 1251417
(43) Date de publication de la demande: 24.12.2014
(73) Titulaire: Essilor International, 94220 Charenton-le-Pont (FR)
(72) Inventeur: HADDADI, Ahmed, F-94220 Charenton-le-Pont (FR)
(74) Mandataire: Allain, Laurent
(86) Numéro de dépôt international: PCT/FR2013/050227
(87) Numéro de publication internationale: WO 2013/121128

(56) Documents cités:
- WO-A1-2008/129168
- FR-A1- 2 526 653
- FR-A1- 2 906 047
- US-A1- 2003 098 953
- US-A1- 2007 195 266

## Description

Des dispositifs de repérages destinés à être fixés sur une monture de lunette sont connus de WO 2008/129168 A1, US 2007/195266 A1 et US 2003/098953 A1.

L'invention est définie dans les revendications. Elle se rapporte à un dispositif de repérage pour une monture de lunette. Le contexte de l'invention se situe dans la prise de mesure de paramètres morpho-géométriques sur un individu porteur de lunettes correctrices. En effet, les lunettes à verres correcteurs ont des formes générales variées au niveau par exemple, du galbe et de la hauteur, et doivent pouvoir s'adapter de façon précise et rigoureuse, à la morphologie d'un visage, et à la position relative des yeux d'un individu à travers, par exemple, la distance inter-pupillaire. Ces paires de lunettes doivent également être élaborées en tenant compte du degré d'inclinaison plus ou moins marqué de la tête, lorsqu'un individu est amené à lire de près, ou à regarder vers l'infini, dans une posture de confort naturelle. Les caractéristiques de ces lunettes sont déterminées au moyen de procédés de mesure mettant en scène un individu porteur de lunettes, en situation de lecture de près et/ou de loin, dans une position naturelle de confort, n'impliquant généralement aucune contrainte de posture. Ces procédés se fondent sur la capture d'images du visage, avec un appareil d'acquisition d'images, afin de déterminer un certain nombre de paramètres morpho-géométriques, tels que par exemple une hauteur de verre ou un angle pantographique, lesdits paramètres servant à élaborer une paire de lunettes la plus adaptée possible à l'individu considéré. Bien que ces procédés soient rapides et faciles à mettre en oeuvre, et bien qu'ils soient ergonomiques et conviviaux vis-à-vis de l'individu testé, ils peuvent parfois se montrer relativement imprécis au niveau des résultats qu'ils fournissent, dans la mesure où il peut s'avérer difficile de repérer avec précision le positionnement de la monture sur les clichés obtenus, ainsi que celui de certains éléments du visage, comme par exemple les pupilles. Une solution privilégiée consiste à utiliser un dispositif de repérage, sous la forme par exemple d'un clip, qui vient se fixer temporairement à la monture, et qui est porteur d'un certain nombre de marqueurs, pour faciliter le repérage tridimensionnel de ladite monture sur les clichés obtenus lors de ces procédés de mesure. Or, les dispositifs de repérage existants ont une géométrie fixe, et sont dotés de moyens de liaison fixes avec la monture, les rendant peu adaptables à des montures de géométrie et de taille différentes. Il en résulte que ces dispositifs de repérage peuvent se retrouver très décalés par rapport à la monture qu'ils sont sensés représenter, et induire des erreurs conséquentes sur les mesures obtenues.

Un dispositif de repérage selon l'invention, est configuré pour venir s'arrimer de façon satisfaisante sur toute sorte de montures de lunettes, possédant ou non un galbe, et ayant une hauteur de verre plus ou moins importante. En effet, il est équipé de moyens de fixation à la monture, qui lui permettent de demeurer proche du plan des verres de la monture et donc parfaitement représentatif de ladite monture dans l'espace. Il contribue à faciliter le déroulement des procédés de mesure, car il évite la mise en place d'une étape de sélection du dispositif de repérage le plus adapté à la paire de lunettes considérée, en étant configuré pour s'ajuster à tout type de monture. Dans un souci de clarté, il est à noter que le terme « monture » est général, et peut tout aussi bien désigner une paire de lunettes percée, cerclée ou rainée. De même, les termes «avant», «arrière», «supérieur», «inférieur» et «latéral» appliqués au clip, doivent être interprétés comme si ledit clip était fixé sur une monture, et que la monture était elle-même placée sur le visage d'un individu, en position sensiblement vertical.

L'invention a pour objet un dispositif de repérage tel que défini dans les revendications destiné à venir se fixer sur une monture de lunettes afin de repérer spatialement ladite monture, ledit dispositif possédant une barre transversale, une avancée centrale , deux marqueurs latéraux et un marqueur central, chaque marqueur étant constitué d'une zone claire et d'une zone plus foncée. La principale caractéristique d'un dispositif de repérage selon l'invention est qu'il comprend au moins un organe de fixation mobile, apte à se déplacer le long d'au moins une glissière de la barre. Un organe de fixation constitue la partie du dispositif de repérage qui est destinée à assurer le point de contact entre ledit dispositif et une monture donnée pour accrocher ledit dispositif sur ladite monture. Ainsi, chaque organe de fixation mobile peut être déplacé sur le dispositif de repérage, de façon à pouvoir fixer de façon satisfaisante ledit dispositif sur une monture de lunettes donnée, caractérisée par son galbe et la hauteur de ses verres, et de façon à se positionner au niveau des pupilles. En effet, il est fondamental que le dispositif de repérage soit le plus près possible du plan des verres de la monture, quel que soit le galbe de ladite monture, pour pouvoir représenter avec précision et fiabilité ladite monture dans l'espace. Avec un dispositif de repérage possédant des attaches fixes, le risque d'avoir un décalage important entre le plan des verres pour une monture très galbée et ledit dispositif, est élevé. Le fait de posséder des organes de fixation mobiles permet de positionner le dispositif de repérage de façon satisfaisante sur n'importe quel type de monture, au plus proche des pupilles. Il est supposé que l'interaction entre chaque organe de fixation et chaque glissière permet audit organe de demeurer figé dans sa position. Chaque organe mobile peut revêtir toute forme, et peut même être coloré, pour apparaitre visible sur un film ou sur une photo. Les marqueurs fixes ainsi que l'avancée centrale sont des attributs habituels d'un dispositif de repérage d'une monture dans l'espace. A ce sujet, l'avancée centrale est assimilable à une licorne, qui saille vers l'avant du visage d'un individu lorsqu'il porte des lunettes équipées d'un dispositif de repérage, et confère au dispositif de repérage une géométrie un peu plus tridimensionnelle. Elle permet notamment de mieux repérer la monture dans l'espace, lorsque la tête de l'individu est inclinée.

Avantageusement, la barre transversale est dotée de deux glissières rectilignes s'étendant le long d'un axe longitudinal de ladite barre pour permettre le déplacement de deux organes de fixation mobiles. Une fois que la monture équipée du dispositif de repérage est portée par le visage sensiblement vertical d'un individu, la barre se retrouve au dessus des verres et s'étend dans une direction transversale et sensiblement horizontale. De cette manière, les deux organes mobiles se déplacent en translation au dessus de chaque verre selon une direction horizontale. L'objectif de la présence de ces deux organes de fixation, outre le fait d'assurer un bon positionnement du dispositif de repérage sur la monture quelles que soient sa forme et sa hauteur, est également de pouvoir repérer facilement et précisément la position de chaque pupille de l'individu, sur un cliché ou un film. Il est donc important de pouvoir repérer facilement et rapidement lesdits organes de fixation sur un cliché, soit en leur affectant une forme particulière facilement identifiable, soit en les colorant, soit en en combinant ces deux caractéristiques. Il est à noter que les positions des deux organes de fixation sur la barre peuvent être réglées, soit indépendamment l'une de l'autre, soit en liaison l'une avec l'autre, l'écartement ou le rapprochement de l'une entraînant l'écartement ou le rapprochement de l'autre.

De façon avantageuse, les deux organes de fixation sont ajustables indépendamment l'un de l'autre pour représenter la position de chaque pupille. Les organes de fixation étant particulièrement visibles sur une image, comme une photo ou un film, ils peuvent également servir à améliorer le repérage des pupilles d'un individu.

De façon préférentielle, chaque organe de fixation mobile est un patin doté d'un matériau antidérapant, chacun desdits patins étant conçu pour venir au contact de la partie supérieure de la monture. Chaque organe de fixation constitue un point de contact avec la monture, et le matériau antidérapant est destiné à empêcher le dispositif de repérage de bouger sur ladite monture durant le procédé de mesure.

De façon avantageuse, chaque patin possède deux branches destinées à venir se placer de chaque coté de la monture, le matériau antidérapant étant placé sur les zones de chaque branche en regard l'une de l'autre. De cette manière, non seulement lesdits patins peuvent être réglés le long de chaque glissière de la barre pour assurer une fixation représentative du dispositif de repérage sur une monture et matérialiser la position de chaque pupille, mais ils agissent également en tant qu'organe de guidage pour permettre d'apposer correctement le dispositif de repérage sur la monture. Préférentiellement, chaque patin à une forme en V.

Avantageusement, le dispositif de repérage selon l'invention, possède deux bras de levier latéraux placés chacun à une extrémité de la barre, chacun desdits bras de levier pouvant être déplacé dans le plan de la monture pour venir s'adapter à une longueur de monture donnée, et étant anti déformant dans une direction perpendiculaire audit plan. Les organes de fixation mobiles permettent au dispositif de venir au contact de la partie supérieure de la monture, tandis que les deux bras de levier latéraux permettent audit dispositif de repérage d'établir un contact latéral avec ladite monture. Le déplacement des bras de levier permet d'adapter l'écartement du dispositif de repérage à celui de la monture, afin de favoriser le contact entre ces deux éléments. Le déplacement des bras peut être en translation ou en rotation. Il peut également être assuré par une déformation élastique desdits bras, le contact du dispositif avec la monture étant réalisé lorsque lesdits bras se relaxent pour retrouver leur forme initiale. Chaque bras de levier ne peut pas se déformer dans une direction perpendiculaire à la monture, afin d'éviter un décalage entre le dispositif de repérage et la monture, qui aboutirait à un positionnement du dispositif non représentatif de la monture ou à une désolidarisation dudit dispositif et de ladite monture. Selon un mode de réalisation préféré d'un dispositif de repérage selon l'invention, chaque bras de levier est constitué par une lame ressort anti déformante dans une direction perpendiculaire au plan de la monture, pour maintenir la monture dans une position analogue à celle qu'elle occuperait en l'absence du dispositif de repérage. Chaque bras de levier latéral ne doit pas être conçu pour contribuer à incliner la monture de façon plus marquée que celle de sa position naturelle en l'absence du dispositif de repérage.

De façon préférentielle, chaque bras de levier se termine par un patin secondaire antidérapant conçu pour venir au contact de la partie inférieure de la monture, chaque patin possédant deux branches destinées à venir se placer de chaque coté de la monture. De cette manière, grâce à ces bras de levier, le dispositif de repérage enserre la monture à la fois latéralement et par en-dessous. Combiné aux marqueurs mobiles qui viennent en appui contre la partie supérieure de la monture, le dispositif de repérage enserre la monture dans les trois principales directions de l'espace.

Préférentiellement, une branche de chaque patin supérieur et une branche de chaque patin inférieur est positionnée au droit de la barre, afin d'éviter un décalage entre ledit dispositif et la monture. Lorsque le dispositif de repérage est placé sur une monture, qui est elle-même portée sur le visage d'un individu, chaque branche au droit de la barre s'étend selon une direction sensiblement vertical, chacune desdites branches servant de butée de blocage, afin d'éviter un décalage entre la position du dispositif de repérage et le plan de la monture.

Selon un premier mode de réalisation préféré d'un dispositif de repérage selon l'invention, chaque bras de levier est de forme arrondie et est déformable élastiquement, lesdits bras de levier pouvant être écartés pour venir s'adapter à une monture plus large. Le profil arrondi de chaque bras de levier facilite le contact entre le dispositif de repérage et le contour généralement arrondi de la monture. Le contact étroit entre le dispositif de repérage et la monture s'effectue au niveau de ces bras de levier, qui ont tendance à reprendre leur forme initiale après avoir été écartés.

Selon un deuxième mode de réalisation préféré d'un dispositif de repérage selon l'invention, chaque bras de levier est de forme arrondie et est monté pivotant sur la barre. Plutôt que d'être déformés élastiquement, chaque bras peut ainsi pivoter d'un angle plus ou moins important en conservant sa forme initiale, pour venir s'adapter à une monture de géométrie et de taille données. Le mouvement des bras s'effectue naturellement, sans engendrer de déformation élastique.

Avantageusement, chaque bras de levier est monté en rotation sur la barre par l'intermédiaire d'un segment de liaison pouvant occuper deux positions en rotation. Avec un tel montage, le dispositif de repérage peut adopter une première configuration élargie et une deuxième configuration plus étroite, l'adoption d'une configuration étant dictée par les dimensions, la géométrie et le galbe de la monture.

De façon avantageuse, chaque bras de levier est constitué de deux parties reliées entre elles par une liaison articulée. Cette configuration accroit la précision de montage du dispositif de repérage sur la monture, en impliquant des bras de levier subdivisés en deux segments rotatifs de petite dimension.

Préférentiellement, la barre présente deux segments rectilignes de longueur identique, et faisant entre eux un angle, lesdits deux segments en angle ainsi que l'avancée centrale se retrouvant dans le même plan. Soit le dispositif de repérage est conçu, soit avec une barre inamovible, pouvant être rectiligne ou composée avec deux segments inclinés, soit avec une barre ajustable pour passer d'une configuration rectiligne à une configuration à deux segments inclinés. Pour cette configuration, la barre peut être constituée de deux segments rectilignes reliés entre eux au moyen d'une liaison articulée, ladite barre pouvant se transformer d'un objet parfaitement rectiligne en un objet possédant deux segments plus ou moins inclinés. Généralement, les montures sont galbées de façon symétrique, et, de façon à ce que le dispositif de repérage s'adapte à cette symétrie, la barre est dotée de deux segments en position symétrique par rapport à l'avancée centrale.

De façon avantageuse, l'angle entre les deux segments est compris entre 180° et 130°.

Un deuxième objet de l'invention se rapporte à un support d'un dispositif de repérage conforme à l'invention. La principale caractéristique d'un support selon l'invention, est qu'il comprend une face dotée d'un orifice pour recevoir l'avancée centrale dudit dispositif, ledit dispositif venant se placer contre le support de manière à ce que le plan dans lequel sont inscrits la barre et les deux bras de levier se retrouve parallèle à ladite face. Un tel support est destiné à faciliter le montage d'un dispositif de repérage selon l'invention sur une monture, au moyen d'une manipulation aisée et rapide, ne nécessitant aucun effort particulier. Un tel support permet également d'éviter de manipuler le dispositif de repérage sur la monture une fois que celle-ci est placée sur le visage de l'individu, ce type d'opération pouvant s'avérer hasardeuse et peu hygiénique. La face du support, peut par exemple être plane ou peut être constituée de deux parties planes inclinées l'une par rapport à l'autre. Dans le premier cas, le support sera adapté à un dispositif de repérage muni d'une barre quasiment rectiligne. Dans le deuxième cas, il sera plutôt adapté à un dispositif de repérage possédant une barre constituée par deux segments incliné l'un par rapport à l'autre. Un même support peut être également conçu avec les deux types de surface ensemble.

Avantageusement, le support comprend des moyens de retenue dudit dispositif de repérage. En effet, la configuration pour laquelle le support se retrouve en position verticale, en étant par exemple accroché à un mur, peut s'avérer intéressante. Il est alors important de pouvoir maintenir le dispositif de repérage dans le support en position verticale. Ces moyens de retenue peuvent être de toute nature, comme par exemple, mécaniques, magnétiques ou électriques.

L'invention se rapporte également à un procédé de montage sur une monture d'un dispositif de repérage tel que défini dans les revendications, ledit dispositif étant préalablement fixé à un support selon l'invention. La principale caractéristique d'un procédé de montage selon l'invention, est qu'il comprend les étapes suivantes :
- Prise manuelle de la monture au niveau de ses branches, puis acheminement de ladite monture vers le dispositif de repérage maintenu contre le support,
- Présentation de la monture dans une position inclinée par rapport au dispositif de repérage, pour insérer la partie supérieure de ladite monture dans les deux patins antidérapants du dispositif de repérage,
- Rotation de la monture pour venir insérer sa partie inférieure dans les patins secondaires de chaque bras de levier,
- Retrait de la monture équipée du dispositif de repérage.

Un tel procédé de montage s'effectue simplement dans la continuité du mouvement. L'individu apporte sa monture de façon inclinée par rapport au dispositif de repérage, puis imprime un simple mouvement de rotation dans le même sens pour d'abord placer la partie supérieure de la monture entre les patins antidérapants, puis pour insérer la partie inférieure de ladite monture dans les patins secondaires des bras de levier. Une fois que les verres de la monture se retrouvent sensiblement parallèles à la face du support, l'individu retire sa monture équipée du dispositif de repérage, en faisant coulisser l'avancée centrale hors de l'orifice.

Les dispositifs de repérage selon l'invention présentent l'avantage de permettre des procédés de mesure de paramètres morpho-géométriques d'un individu, qui sont plus fiables, plus précis et donc plus performants, en offrant une prestation plus complète à travers son moyen de fixation ajustable, pouvant s'adapter à une pluralité de montures de forme, de galbe et de hauteur différentes. De cette manière, le dispositif de repérage demeure proche du plan des verres de la monture, et assure une bonne représentativité de la monture dans l'espace. Ils ont de plus l'avantage de posséder, à travers leur organe de fixation mobile, des moyens de repérage de chaque pupille, car leur positionnement une fois que le dispositif de repérage est fixé sur la monture, correspond à peu près à celui des pupilles de l'individu.

On donne ci-après, une description détaillée d'un mode de réalisation préféré d'un dispositif de repérage selon l'invention ainsi que d'un procédé de fixation d'un tel dispositif sur une monture, en se référant aux figures 1 à 5c.
- La figure 1 est une vue en perspective d'un dispositif de repérage selon l'invention,
- La figure 2a est une vue en perspective d'une extrémité d'un dispositif de repérage selon l'invention, montrant un bras de levier dans une première position,
- La figure 2b est une vue en perspective d'une extrémité d'un dispositif de repérage selon l'invention, montrant un bras de levier dans une deuxième position,
- La figure 2c est une vue en perspective d'une extrémité d'un autre mode de réalisation préféré d'un dispositif de repérage selon l'invention,
- La figure 3 est une vue en perspective d'un troisième mode de réalisation préféré d'un dispositif de repérage selon l'invention,
- La figure 4 est une vue schématisée de face d'une monture équipée d'un dispositif de repérage selon l'invention, et montrant la position des patins par rapport aux pupilles d'un individu,
- La figure 5a est une vue en perspective d'un support selon l'invention, d'un dispositif de repérage selon l'invention,
- La figure 5b est une vue en perspective du support de la figure 5a, illustrant une première étape d'un procédé de montage d'un dispositif de repérage sur une monture,
- La figure 5c est une vue en perspective du support de la figure 5a, illustrant une deuxième étape d'un procédé de montage d'un dispositif de repérage sur une monture,

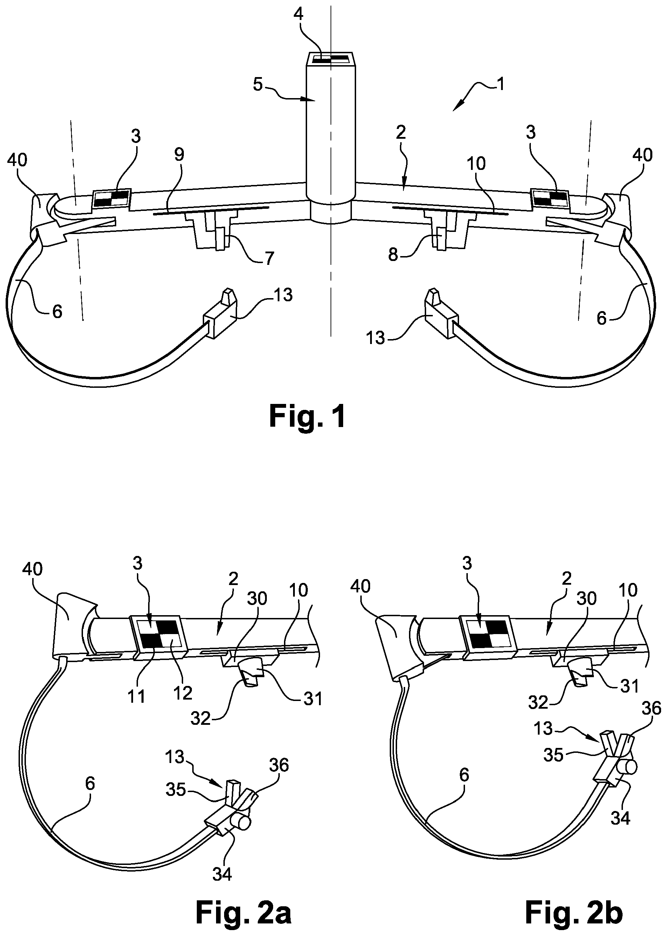

En se référant à la figure 1, dispositif de repérage selon l'invention est constitué par un clip de repérage 1, comprenant une barre 2 principale, trois marqueurs fixes 3,4, une avancée centrale 5, deux bras de levier latéraux 6 et deux patins 7,8 coulissants. La barre 2, qui peut être considérée comme la partie supérieure du clip 1, est droite et possède deux glissières 9,10 alignées, s'étendant selon un axe longitudinal de ladite barre 2 et dans lesquelles peuvent coulisser les deux patins 7,8. La barre 2 peut être divisée fictivement en deux demi-barres, et chaque glissière 9,10 est alors située dans une zone centrale de chacune des demi-barres. Les points centraux des deux glissières 9,10 sont séparées l'un de l'autre d'environ 65mm, et la longueur de chaque glissière 9,10 est d'environ 25mm. Chaque patin 7,8 possède une embase supérieure 30 dans laquelle sont implantées deux branches 31,32 inférieures ménageant entre elles un espace libre, ladite embase 30 étant configurée pour coulisser dans une glissière 9,10 de la barre 2, et lesdites branches 31,32 étant alignées dans un plan vertical et perpendiculaire à un axe longitudinal de la glissière 9,10. Préférentiellement les deux branches 30,31 sont disposées l'une par rapport à l'autre, de manière à ce qu'elles divergent en s'éloignant de l'embase 30. L'une 32 des deux branches est implantée dans l'embase 30 de façon à se retrouver perpendiculaire à la barre 2, ladite branche 32 servant alors de butée à la monture pour éviter au clip 1 de se décaler par rapport à ladite monture. Les zones de chaque branche 30,31 se faisant face, sont revêtues d'un matériau antidérapant. L'avancée centrale 5 est implantée au centre de la barre 2 et s'étend vers l'avant de ladite barre 2, comme une licorne. L'avancée centrale 5 peut constituer une pièce rapportée par rapport à la barre 2, ou bien peut former une seule et même pièce avec ladite barre 2. Le clip possède trois marqueurs 3,4 fixes et identiques, dont deux 3 se retrouvent au niveau des deux extrémités de la barre 2, et dont le troisième est placé sur l'extrémité libre de l'avancée centrale 5. Les trois marqueurs 3,4 s'inscrivent dans trois plans parallèles, placés sur la face avant du clip 1. Chaque marqueur fixe 3,4 est constitué par un carré partagé en quatre carrés identiques de plus petite dimension, dont les deux carrés 11 d'une diagonale sont plus foncés que les carrés 12 de l'autre diagonale. Préférentiellement, chaque marqueur fixe 3,4 est matérialisé par un mini damier possédant deux cases noires 11 et deux cases blanches 12 qui se croisent. Cependant, ces marqueurs peuvent faire intervenir d'autres couleurs, comme par exemple, du gris clair et du gris foncé.

En se référant aux figures 2a et 2b, le clip 1 possède deux bras de levier 6 latéraux de forme arrondie, et implantés au niveau de la partie distale de chacune des deux extrémités de la barre 2. Ces deux bras 6 de levier sont courbés vers l'intérieur du clip 1 et se terminent chacun par un patin secondaire antidérapant 13 destiné à venir au contact du bord inférieur de la monture. Ces deux patins secondaires antidérapants 13 possèdent chacun une embase inférieure 34 et deux branches supérieures 35,36 ménageant entre elles un espace libre, lesdites branches 35,36 étant alignées dans un plan vertical et perpendiculaire à un axe longitudinal de la barre 2. A l'image des patins supérieurs 7,8, l'une 35 des deux branches est implantée dans l'embase 34 de façon à se retrouver perpendiculaire à la barre 2, ladite branche 35 servant alors de butée à la monture pour éviter au clip 1 de se décaler par rapport à ladite monture. De façon plus précise, la branche 35 d'un patin inférieur 13 qui est implantée perpendiculairement à la barre 2, est alignée avec la branche 32 du patin supérieur 7,8 lui correspondant, et qui est elle-même implantée perpendiculairement à la barre 2. Chaque bras 6 est constitué par une bande étroite de métal, ayant une faible épaisseur, et peut être avantageusement représenté par une lame ressort en acier. Chaque bras de levier 6 est relié à la barre 2, par l'intermédiaire d'un segment 40 monté articulé autour d'un axe perpendiculaire à un axe longitudinal de ladite barre 2. En effet, chaque bras de levier 6 est rigidement fixé au segment 40, qui est lui-même monté en rotation sur la barre 2. De cette manière, en se référant à la figure 2a, chaque bras 6 peut adopter une première position de grande ouverture pour laquelle le patin secondaire 13 est éloigné de la barre 2 et, en se référant à la figure 2b, il peut également occuper une deuxième position plus fermée, pour laquelle ledit patin secondaire 13 s'est rapproché de ladite barre 2, les deux positions se déduisant l'une de l'autre par une simple rotation. Chaque segment 40 rotatif est conçu pour demeurer bloqué sur la barre 2, dans chacune de ses deux positions. Grâce à cette flexibilité de positionnement rendue possible à la fois par la déformation élastique des bras de levier 6 et par la possibilité d'occuper ces deux positions distinctes, le clip 1 selon l'invention peut enserrer latéralement un grand éventail de montures plus ou moins larges, et ayant des verres de hauteur variable. Il est à noter que chaque bras de levier 6 est configuré pour que le patin secondaire 13 antidérapant situé à son extrémité, se retrouve au droit de chaque patin 7,8 coulissant de la barre 2, lorsque le clip 1 est monté sur la monture. Les patins 7,8 coulissant et les patins secondaires 13 leur correspondant, définissent ainsi deux axes parallèles, passant chacun par, ou à proximité immédiate de, chaque pupille de l'individu. Il faut souligner que chaque bras 6 est déformable dans le plan de la monture, pour venir s'adapter à une taille de monture donnée, mais qu'il demeure non déformant dans une direction perpendiculaire audit plan de la monture. De cette manière, les bras 6 contribuent à maintenir la monture dans une position naturelle, qu'elle adopterait sur le visage d'un individu en l'absence dudit clip 1.

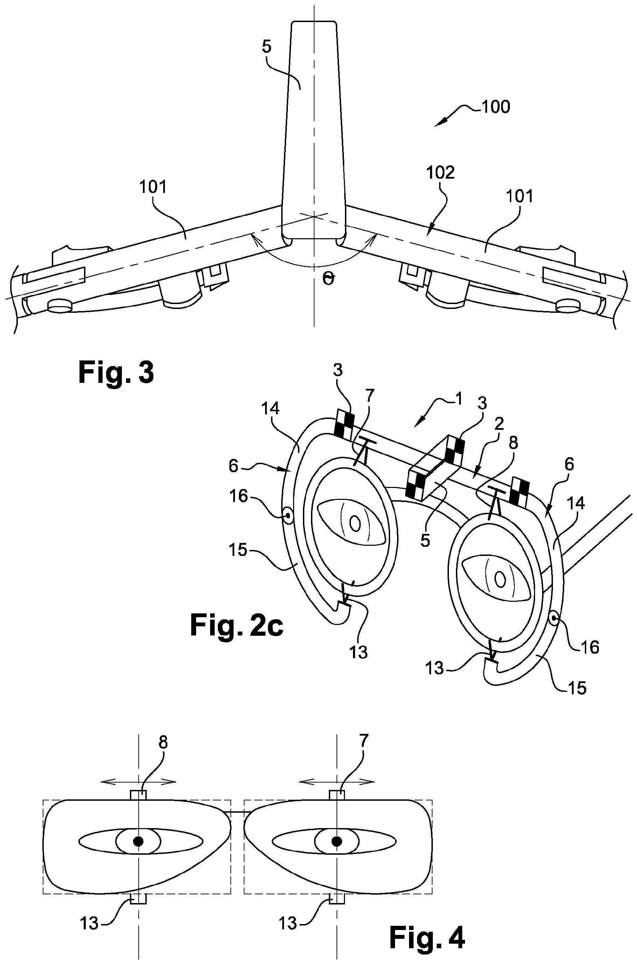

En se référant à la figure 2c, chaque bras de levier 6 peut être constitué de deux parties incurvées 14,15, l'une à la suite de l'autre, la première partie 14 étant montée en rotation sur la barre 2 et la deuxième partie 15 étant montée en rotation au niveau d'un axe 16 situé à l'extrémité libre de ladite première partie 14. Lesdites parties 14,15 sont agencées de manière à être incurvées dans le même sens, la deuxième partie 15 se terminant par un patin antidérapant 13. Cette articulation supplémentaire entre les deux parties constitutives 14,15 de chaque bras de levier 6, augmente ainsi les configurations possibles d'utilisation d'un clip 1 selon l'invention, et accroit la précision de contact entre ledit clip 1 et la monture considérée.

En se référant à la figure 3, un deuxième mode de réalisation préféré d'un clip 100 selon l'invention, peut présenter une barre 102 constituée de deux segments 101 rectilignes de même longueur mais non alignés. En effet, certaines paires de lunettes actuelles ont un profil galbé pour coller au plus près du visage d'un individu. Or, pour ce type de monture, un clip 1 possédant une barre 2 droite, semble peu adapté pour représenter avec précision la monture galbée dans l'espace. Pour cette raison, la géométrie du clip 100 a été modifiée de façon à ce que les deux segments 101 de la barre 102 suivent au plus près le profil galbé de ladite monture. De cette manière, la barre 102 et l'avancée centrale 5 se retrouvent dans le même plan, ladite avancée 5 prenant naissance au niveau du point de jonction des deux segments 101 et se prolongeant en s'éloignant desdits segments 101, suivant un axe de symétrie passant entre lesdits segments 101. Préférentiellement, l'angle θ entre les deux segments 101 est compris entre 180° et 130°.

Ainsi, un clip 1,100 selon l'invention peut posséder, soit une barre 2 droite, soit une barre 102 avec deux segments 102 inclinés. Selon un autre mode de réalisation préféré d'un clip selon l'invention, le clip peut posséder une barre en deux parties, reliées l'une à l'autre de façon articulée. De cette manière, le clip peut s'adapter facilement et précisément, aussi bien à une monture dépourvue de galbe, qu'à une de monture possédant un fort galbe.

En se référant à la figure 4, les patins antidérapants 7,8 sont déplacés le long de la barre 2 du clip 1 de façon à se retrouver au droit de chaque pupille de l'individu. Autrement dit, une fois que la monture équipée du clip 1 est portée par le visage sensiblement vertical de l'individu, chaque patin 7,8 est réglé de manière à se retrouver aligné sur chaque pupille de l'individu selon un axe vertical 16,17.

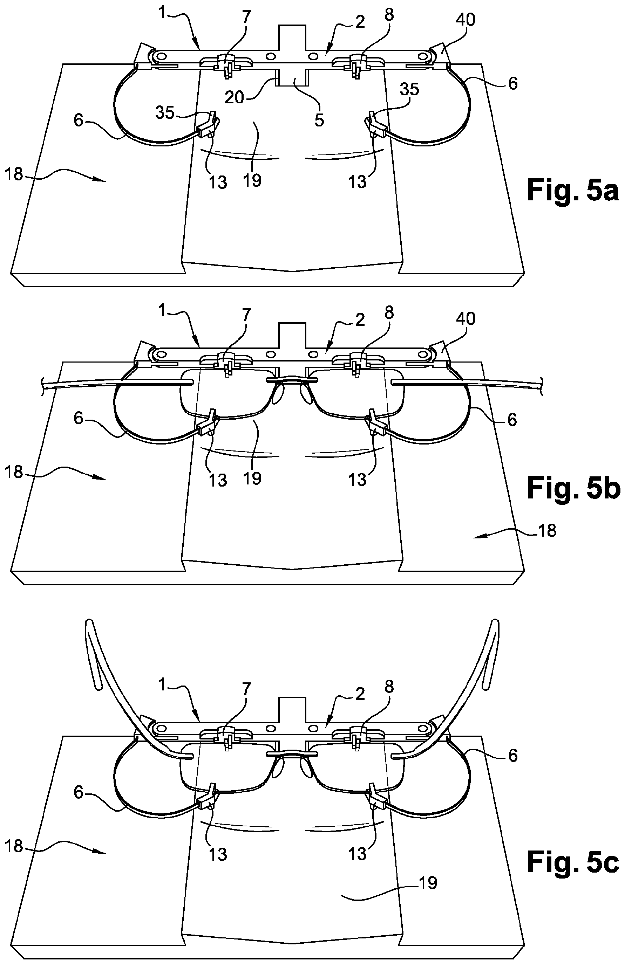

En se référant à la figure 5a, le clip 1 selon l'invention est placé sur un support 18, dont la géométrie est conçue pour faciliter le montage dudit clip 1,100 sur une monture. Le support 18 présente une face de contact plane 19, dotée d'un orifice 20. Le clip 1,100 est placé contre le support 18, de sorte que l'avancée centrale 5 soit placée dans l'orifice 20, et de sorte que le plan dans lequel sont inscrits la barre 2 et les deux bras de levier 6 soit parallèle à la face de contact 19 plane dudit support 18. Ce support 18 est destiné à stocker le clip 1,100 entre deux procédés de mesure, dans une position qui va faciliter son montage sur une paire de lunettes.

En effet, un procédé de montage d'un clip 1 selon l'invention placé préalablement sur un support 18 selon l'invention, comprend les étapes suivantes :
- Prise manuelle de la monture au niveau de ses branches, puis acheminement de ladite monture vers le clip 1 maintenu contre le support 18,
- En se référant à la figure 5b, présentation de la monture dans une position inclinée par rapport au clip 1, pour insérer la partie supérieure de ladite monture dans les deux patins 7,8 antidérapants du clip 1,
- En se référant à la figure 5b, rotation de la monture jusqu'à insérer sa partie inférieure dans les patins secondaire 13 de chaque bras de levier 6, la partie supérieure de ladite monture étant maintenue dans les patins antidérapants 7,8. De cette manière, la partie supérieure de la monture qui est insérée dans les patins antidérapants 7,8 va servir d'axe de rotation à la monture pour son insertion dans les patins secondaires 13.
- Une fois que les verres de la monture se retrouvent parallèles à la face de contact du support 18, retrait de la monture équipée du clip 1 par coulissement de l'avancée centrale 5 hors de l'orifice 20.

L'invention se rapporte également à un kit de montage se présentant sous la forme d'un coffret, dans lequel sont logés un support 18 et deux clips 1 de repérage pour couvrir toute la gamme de galbes possibles d'une paire de lunette. De cette manière, les deux segments 101 de la barre 102 d'un premier clip 1 font entre eux un angle fixe compris entre 180° et 170°, ledit angle étant préférentiellement égal à 175°, ledit premier clip étant 1 prévu pour les montures très peu galbées. Les deux segments 101 de la barre 102 du deuxième clip 1 font entre eux un angle fixe compris entre 145° et 155°, ledit angle étant préférentiellement égal à 150°, ledit deuxième clip 1 étant conçu pour venir se fixer sur une monture très galbée. Le support 18 comprend deux emplacements distincts pour lesdits clips, le premier emplacement étant matérialisé par une face de contact plane 19 et dotée d'un orifice 20 pour recevoir le premier clip 1 quasiment rectiligne, le deuxième emplacement étant caractérisé par une face de contact en deux parties planes inclinées et par un orifice situé au niveau de l'arête centrale reliant lesdites parties, ledit deuxième emplacement étant conformé pour recevoir le deuxième clip 1 fortement incliné. Le deuxième clip 1 est positionné dans le support 18 de manière à ce que chaque segment 101 de la barre 102 dudit clip 1, se retrouve parallèle à une partie plane inclinée de la face de contact dudit support 18.

## Revendications

1. Dispositif (1,100) de repérage destiné à venir se fixer sur une monture de lunettes afin de repérer spatialement ladite monture, ledit dispositif (1,100) possédant une barre transversale (2,102), une avancée centrale (5), deux marqueurs latéraux (3) et un marqueur central (4), chaque marqueur (3,4) étant constitué d'une zone claire (12) et d'une zone plus foncée (11), ledit dispositif comprenant au moins un organe de fixation mobile (7,8) apte à se déplacer le long d'au moins une glissière (9,10) de la barre (2,102) et deux bras de levier (6) latéraux placés chacun à une extrémité de la barre (2,102), chacun desdits bras de levier (6) étant déformable dans le plan de la monture pour venir s'adapter à une longueur de monture donnée, et étant anti déformant dans une direction perpendiculaire audit plan, chaque bras de levier (6) étant de forme arrondie et étant monté pivotant sur la barre (2,102), **caractérisé en ce que** chaque bras de levier (6) est monté en rotation sur la barre (2,102) par l'intermédiaire d'un segment de liaison (40) pouvant occuper deux positions en rotation, et **en ce que** chaque segment rotatif (40) est conçu pour demeurer bloqué sur la barre (2, 102) dans chacune desdites positions, et grâce à cette flexibilité de positionnement rendue possible à la fois par la déformation élastique des bras de levier (6) et par la possibilité d'occuper ces deux positions distinctes, le dispositif de repérage (1, 100) peut enserrer latéralement un grand éventail de montures plus ou moins larges, et ayant des verres de hauteur variable.

2. Dispositif de repérage selon la revendication 1, **caractérisé en ce que** la barre transversale (2,102) est dotée de deux glissières rectilignes s'étendant le long d'un axe longitudinal de ladite barre (2,102) pour permettre le déplacement de deux organes de fixation mobiles (7,8).

3. Dispositif de repérage selon la revendication 2, **caractérisé en ce que** les deux organes de fixation (7,8) sont ajustables indépendamment l'un de l'autre, pour représenter la position de chaque pupille.

4. Dispositif de repérage selon l'une quelconque des revendications 1 ou 2, **caractérisé en ce que** chaque organe de fixation mobile (7,8) est un patin doté d'un matériau antidérapant, et **en ce que** chacun desdits patins (7,8) est conçu pour venir au contact de la partie supérieure de la monture.

5. Dispositif de repérage selon la revendication 4, **caractérisé en ce que** chaque patin (7,8) possède deux branches (31,32) destinées à venir se placer de chaque coté de la monture, et **en ce que** le matériau antidérapant est placé sur les zones de chaque branche (31,32) en regard l'une de l'autre.

6. Dispositif de repérage selon la revendication 1, **caractérisé en ce que** chaque bras de levier (6) se termine par un patin secondaire antidérapant (13) conçu pour venir au contact de la partie inférieure de la monture, et **en ce que** chaque patin (13) possède deux branches (35,36) destinées à venir se placer de chaque coté de la monture.

7. Dispositif de repérage selon la revendication 6, **caractérisé en ce qu'**une branche (31) du patin supérieur (7, 8) et une branche (36) du patin inférieur (13) correspondant sont alignées selon une direction sensiblement verticale, et **en ce que** l'autre branche (32) du patin supérieur (7, 8) et l'autre branche (35) du patin inférieur (13) correspondant sont alignées selon une direction sensiblement verticale.

8. Dispositif de repérage selon l'une quelconque des revendications 2 à 7, **caractérisé en ce que** la barre (102) présente deux segments (101) rectilignes de longueur identique, et faisant entre eux un angle, et **en ce que** lesdits deux segments (101) en angle ainsi que l'avancée centrale se retrouvent dans le même plan.

9. Dispositif de repérage selon la revendication 8, **caractérisé en ce que** l'angle entre les deux segments (101) est compris entre 180° et 130°.

10. Kit comprenant un support (18) et un dispositif de repérage (1) conforme à l'une quelconque des revendications 1 à 9, **caractérisé en ce que** ledit support (18) comprend au moins une face (19) dotée d'un orifice (20) pour recevoir l'avancée centrale (5) dudit dispositif (1), et **en ce que** ledit dispositif (1) vient se placer contre le support (18) de manière à ce que le plan dans lequel sont inscrits la barre (2) et les deux bras de levier (6) se retrouve parallèle à ladite face (19).

11. Kit selon la revendication 10, **caractérisé en ce que** le support (18) comprend des moyens de retenue dudit dispositif de repérage (1), qui sont de nature mécanique, magnétique ou électrique, et **en ce que** lesdits moyens permettent de retenir ledit dispositif (1) lorsque la face (19) dudit support (18) est en position verticale.

12. Procédé de montage sur une monture d'un dispositif de repérage (1) conforme à l'une quelconque des revendications 1 à 9, **caractérisé en ce qu'**il comprend les étapes suivantes :
- Fixation du dispositif de repérage (1) dans le support (18) d'un kit conforme à l'une quelconque des revendications 13 ou 14, ladite fixation s'effectuant au moyen d'une insertion de l'avancée centrale (15) dudit dispositif de repérage (1) dans l'orifice (20) de la face (19) dudit support (18), de sorte que le plan dans lequel sont inscrits la barre (2) et les deux bras de levier (6) se retrouve parallèle à ladite face (19).
- Prise manuelle de la monture au niveau de ses branches, puis acheminement de ladite monture vers le dispositif de repérage (1) maintenu contre le support (18),
- Présentation de la monture dans une position inclinée par rapport au clip (1), pour insérer la partie supérieure de ladite monture dans les deux patins antidérapants (7,8) du dispositif de repérage (1),
- Rotation de la monture pour venir insérer sa partie inférieure dans les patins secondaires (13) de chaque bras de levier (6),
- Retrait de la monture équipée du dispositif de repérage (1).

## Patentansprüche

1. Markiervorrichtung (1, 100), die dazu bestimmt ist, an einem Brillengestell befestigt zu werden, um das Gestell räumlich zu markieren, wobei die Vorrichtung (1, 100) eine Querstange (2, 102), einen mittleren Vorsprung (5), zwei seitliche Markierungen (3) und eine mittlere Markierung (4) besitzt, wobei jede Markierung (3, 4) aus einem hellen Bereich (12) und einem dunkleren Bereich (11) besteht, wobei die Vorrichtung mindestens ein bewegliches Befestigungselement (7, 8), das sich entlang mindestens einer Gleitführung (9, 10) der Stange (2, 102) verschieben kann, und zwei seitliche Hebelarme (6) enthält, die je an einem Ende der Stange (2, 102) angeordnet sind, wobei jeder der Hebelarme (6) in der Ebene des Gestells verformbar ist, um sich an eine gegebene Gestelllänge anzupassen, und in einer Richtung lotrecht zur Ebene verzugsarm ist, wobei jeder Hebelarm (6) eine abgerundete Form hat und schwenkbar auf die Stange (2, 102) montiert ist, **dadurch gekennzeichnet, dass** jeder Hebelarm (6) mittels eines Verbindungssegments (40) drehbar auf die Stange (2, 102) montiert ist, das zwei Drehstellungen einnehmen kann, und dass jedes drehbare Segment (40) konzipiert ist, in jeder der Stellungen auf der Stange (2, 102) blockiert zu bleiben, und aufgrund dieser Positionierflexibilität, die durch die elastische Verformung der Hebelarme (6) und durch die Möglichkeit, diese zwei unterschiedlichen Stellungen einzunehmen, die Markiervorrichtung (1, 100) seitlich eine große Palette von mehr oder weniger breiten und mit Gläsern variabler Höhe versehenen Gestellen einspannen kann.

2. Markiervorrichtung nach Anspruch 1, **dadurch gekennzeichnet, dass** die Querstange (2, 102) mit zwei geradlinigen Gleitführungen versehen ist, die sich entlang einer Längsachse der Stange (2, 102) erstrecken, um die Verschiebung von zwei beweglichen Befestigungselementen (7, 8) zu ermöglichen.

3. Markiervorrichtung nach Anspruch 2, **dadurch gekennzeichnet, dass** die zwei Befestigungselemente (7, 8) unabhängig voneinander einstellbar sind, um die Stellung jeder Pupille darzustellen.

4. Markiervorrichtung nach einem der Ansprüche 1 oder 2, **dadurch gekennzeichnet, dass** jedes bewegliche Befestigungselement (7, 8) ein mit einem rutschfesten Material versehenes Gleitstück ist, und dass jedes der Gleitstücke (7, 8) konzipiert ist, mit dem oberen Teil des Gestells in Kontakt zu kommen.

5. Markiervorrichtung nach Anspruch 4, **dadurch gekennzeichnet, dass** jedes Gleitstück (7, 8) zwei Schenkel (31, 32) besitzt, die dazu bestimmt sind, sich auf jeder Seite des Gestells zu platzieren, und dass das rutschfeste Material auf den Bereichen jedes Schenkels (31, 32) angeordnet ist, die einander gegenüberliegen.

6. Markiervorrichtung nach Anspruch 1, **dadurch gekennzeichnet, dass** jeder Hebelarm (6) in einem sekundären rutschfesten Gleitstück (13) endet, das konzipiert ist, mit dem unteren Teil des Gestells in Kontakt zu kommen, und dass jedes Gleitstück (13) zwei Schenkel (35, 36) besitzt, die dazu bestimmt sind, sich auf jeder Seite des Gestells zu platzieren.

7. Markiervorrichtung nach Anspruch 6, **dadurch gekennzeichnet, dass** ein Schenkel (31) des oberen Gleitstücks (7, 8) und ein Schenkel (36) des entsprechenden unteren Gleitstücks (13) gemäß einer im Wesentlichen senkrechten Richtung fluchtend ausgerichtet sind, und dass der andere Schenkel (32) des oberen Gleitstücks (7, 8) und der andere Schenkel (35) des entsprechenden unteren Gleitstücks (13) gemäß einer im Wesentlichen senkrechten Richtung fluchtend ausgerichtet sind.

8. Markiervorrichtung nach einem der Ansprüche 2 bis 7, **dadurch gekennzeichnet, dass** die Stange (102) zwei geradlinige Segmente (101) gleicher Länge aufweist, und die zwischen sich einen Winkel bilden, und dass die zwei Segmente (101) über Eck sowie der mittlere Vorsprung sich in der gleichen Ebene befinden.

9. Markiervorrichtung nach Anspruch 8, **dadurch gekennzeichnet, dass** der Winkel zwischen den zwei Segmenten (101) zwischen 180° und 130° liegt.

10. Bausatz, der einen Träger (18) und eine Markiervorrichtung (1) nach einem der Ansprüche 1 bis 9 enthält, **dadurch gekennzeichnet, dass** der Träger (18) mindestens eine Seite (19) aufweist, die mit einer Öffnung (20) versehen ist, um den mittleren Vorsprung (5) der Vorrichtung (1) aufzunehmen, und dass die Vorrichtung (1) sich so gegen den Träger (18) platziert, dass die Ebene, in der sich die Stange (2) und die zwei Hebelarme (6) befinden, parallel zur Seite (19) liegt.

11. Bausatz nach Anspruch 10, **dadurch gekennzeichnet, dass** der Träger (18) Halteeinrichtungen der Markiervorrichtung (1) enthält, die von mechanischer, magnetischer oder elektrischer Beschaffenheit sind, und dass die Einrichtungen es ermöglichen, die Vorrichtung (1) zu halten, wenn die Seite (19) des Trägers (18) in senkrechter Stellung ist.

12. Verfahren zur Montage einer Markiervorrichtung (1) nach einem der Ansprüche 1 bis 9 auf ein Gestell, **dadurch gekennzeichnet, dass** es die folgenden Schritte enthält:
- Befestigung der Markiervorrichtung (1) im Träger (18) eines Bausatzes nach einem der Ansprüche 13 oder 14, wobei die Befestigung mittels einer Einführung des mittleren Vorsprungs (15) der Markiervorrichtung (1) in die Öffnung (20) der Seite (19) des Trägers (18) erfolgt, so dass die Ebene, in der sich die Stange (2) und die zwei Hebelarme (6) befinden, parallel zur Seite (19) liegt,
- manuelles Ergreifen des Gestells im Bereich seiner Bügel, dann Beförderung des Gestells zur gegen den Träger (18) gehaltenen Markiervorrichtung (1),
- Präsentieren des Gestells in einer geneigten Stellung bezüglich des Clips (1), um den oberen Teil des Gestells in die zwei rutschfesten Gleitstücke (7, 8) der Markiervorrichtung (1) einzuführen,
- Drehen des Gestells, um seinen unteren Teil in die sekundären Gleitstücke (13) jedes Hebelarms (6) einzuführen,
- Entnahme des mit der Markiervorrichtung (1) ausgestatten Gestells.

## Claims

1. Locating device (1, 100) intended to be fixed to a spectacle frame in order to spatially locate said frame, said device (1, 100) having a transverse bar (2, 102), a central extension (5), two lateral markers (3) and a central marker (4), each marker (3, 4) consisting of a light area (12) and a darker area (11), said device comprising at least one mobile fixing member (7, 8) that is able to move along at least one slideway (9, 10) on the bar (2, 102) and two lateral lever arms (6) that are each placed at one end of the bar (2, 102), each of said lever arms (6) being deformable in the plane of the frame so as to adapt to a given frame length, and being nondeformable in a direction perpendicular to said plane, each lever arm (6) having a rounded shape and being mounted so as to pivot on the bar (2, 102), **characterized in that** each lever arm (6) is mounted rotatably on the bar (2, 102) by way of a connecting segment (40) that can take up two rotational positions, and **in that** each rotary segment (40) is designed to remain blocked on the bar (2, 102) in each of said two positions, and by virtue of this positioning flexibility that is made possible both by the elastic deformation of the lever arms (6) and by the possibility of taking up these two distinct positions, the locating device (1, 100) can laterally clamp a wide range of frames of greater or lesser width, and having lenses with variable heights.

2. Locating device according to Claim 1, **characterized in that** the transverse bar (2, 102) is provided with two rectilinear slideways that extend along a longitudinal axis of said bar (2, 102) so as to allow two mobile fixing members (7, 8) to move.

3. Locating device according to Claim 2, **characterized in that** the two fixing members (7, 8) are adjustable independently of one another in order to represent the position of each pupil.

4. Locating device according to either of Claims 1 and 2, **characterized in that** each mobile fixing member (7, 8) is a shoe provided with a nonslip material, and **in that** each of said shoes (7, 8) is designed to come into contact with the upper part of the frame.

5. Locating device according to Claim 4, **characterized in that** each shoe (7, 8) has two legs (31, 32) that are intended to be positioned on each side of the frame, and **in that** the nonslip material is placed on those areas of each leg (31, 32) that are opposite one another.

6. Locating device according to Claim 1, **characterized in that** each lever arm (6) ends with a secondary nonslip shoe (13) that is designed to come into contact with the lower part of the frame, and **in that** each shoe (13) has two legs (35, 36) that are intended to be placed on each side of the frame.

7. Locating device according to Claim 6, **characterized in that** a leg (31) of the upper shoe (7, 8) and a leg (36) of the corresponding lower shoe (13) are aligned in a substantially vertical direction, and **in that** the other leg (32) of the upper shoe (7, 8) and the other leg (35) of the corresponding lower shoe (13) are aligned in a substantially vertical direction.

8. Locating device according to any one of Claims 2 to 7, **characterized in that** the bar (102) has two rectilinear segments (101) which have an identical length and form an angle between one another, and **in that** said two angled segments (101) and also the central extension are positioned in the same plane.

9. Locating device according to Claim 8, **characterized in that** the angle between the two segments (101) is between 180° and 130°.

10. Kit comprising a support (18) and a locating device (1) according to any one of Claims 1 to 9, **characterized in that** said support (18) comprises at least one face (19) that is provided with an orifice (20) for receiving the central extension (5) of said device (1), and **in that** said device (1) is placed against the support (18) such that the plane in which the bar (2) and the two lever arms (6) are inscribed is positioned parallel to said face (19).

11. Kit according to Claim 10, **characterized in that** the support (18) comprises means for retaining said locating device (1), which are of a mechanical, magnetic or electrical type, and **in that** said means make it possible to retain said device (1) when the face (19) of said support (18) is in a vertical position.

12. Method for mounting a locating device (1) according to any one of Claims 1 to 9 on a frame, **characterized in that** it comprises the following steps of:
- fixing the locating device (1) in the support (18) of a kit according to either one of Claims 13 and 14, said fixing being effected by means of the central extension (15) of said locating device (1) being inserted into the orifice (20) in the face (19) of said support (18), such that the plane in which the bar (2) and the two lever arms (6) are inscribed is positioned parallel to said face (19),
- manually grasping the frame at its temples, then carrying said frame to the locating device (1) held against the support (18),
- presenting the frame in an inclined position with respect to the clip (1) in order to insert the upper part of said frame into the two nonslip shoes (7, 8) of the locating device (1),
- rotating the frame in order to insert its lower part into the secondary shoes (13) of each lever arm (6),
- removing the frame equipped with the locating device (1).
